# EUROPEAN PATENT SPECIFICATION

(11) **EP 2 316 898 B1**
(45) Date of publication and mention of the grant of the patent: **19.09.2012**
(21) Application number: 10189243.8
(22) Date of filing: 28.10.2010
(51) Int. Cl.: C09J 7/02

(54) **Release liner-attached pressure-sensitive adhesive sheet**
Auf einer Abziehschicht befestigte druckempfindliche Klebefolie
Feuille adhésive sensible à la pression fixée à un inhibiteur à déclencheur

(30) Priority: 30.10.2009 JP 2009250438
(43) Date of publication of application: 04.05.2011
(73) Proprietor: Nitto Denko Corporation, Ibaraki-shi Osaka 567-8680 (JP)
(72) Inventor: Nakagawa, Yoshio, Ibaraki-shi Osaka (JP); Uesugi, Masanori, Ibaraki-shi Osaka (JP); Kai, Makoto, Ibaraki-shi Osaka (JP); Oosawa, Yuka, Ibaraki-shi Osaka (JP); Yamamoto, Yasunori, Ibaraki-shi Osaka (JP)
(74) Representative: Grünecker, Kinkeldey, Stockmair & Schwanhäusser

(56) References cited:
- EP-A1- 1 903 082
- WO-A1-02/13980
- US-A1- 2007 231 569
- US-B1- 6 197 397

## Description

### FIELD OF THE INVENTION

This invention relate to a release liner-attached pressure-sensitive adhesive sheet, particularly, it relates to a release liner-attached pressure-sensitive adhesive sheet, which can be applied to an adherend with good adhesiveness due to easy escape of air in applying thereto at the time of its use (that is, when the pressure-sensitive adhesive sheet is applied to the adherend by releasing the release liner therefrom).

### BACKGROUND OF THE INVENTION

In general, a relatively large applying area and also a decorative designing of appearance are required by a pressure-sensitive adhesive sheet for paint substitute, a pressure-sensitive adhesive sheet for decoration, a pressure-sensitive adhesive sheet for surface protection and the like which are applied to the facing of vehicles such as a car and an automatic two-wheeled vehicle, a house construction material and the like. Accordingly, there is known a technique for preventing a phenomenon of lowering appearance quality caused by the remaining gas incorporated as bubbles at the time of the above-mentioned application, by forming grooves on the surface of an pressure-sensitive adhesive layer in advance and thereby forming flowing routes which allow a fluid (typically a gas such as air) to escape into the outside moiety making use of the above-mentioned grooves, in applying a pressure-sensitive adhesive sheet to an adherend. As conventional art references related to this type of pressure-sensitive adhesive sheet, JP-A-2004-149811, JP-A-2006-028416 and JP-A-2007-070401 may be mentioned (see Patent Documents 1 to 3).

As a preferable method for forming grooves on the surface of pressure-sensitive adhesive layer, there may be mentioned a method in which a shape of grooves is formed in advance on a release liner which protects the pressure-sensitive adhesive layer until the pressure-sensitive adhesive sheet is used (at the time of applying it to an adherend) and then this groove shape is transferred onto the pressure-sensitive adhesive layer. In the release liner having a surface which is structured in such a manner that the above-mentioned grooves can be formed (a surface shape having ridges which correspond to the above-mentioned grooves), a polyolefin resin composition (typically a polyethylene resin composition) is suitably used as a material which constitutes at least the above-mentioned surface moiety among the liner, from the viewpoint of easy forming (structuring) of the above-mentioned surface, and the like.

Also, though a film including a urethane polymer has been used as the substrate which constitutes a pressure-sensitive adhesive sheet (see Patent Documents 4 to 6), there is a problem in that flexibility as the film (particularly, flexibility for the irregular surface and curved surface of vinyl chloride sol coating part) is not sufficient when used as the substrate of a pressure-sensitive adhesive for coating surface protection such as an automobile coating film. In addition, JP-T-2001-520127 (see Patent Document 7) discloses, as a coating surface protection film of automobile and the like, a multilayer film which includes an inter penetration polymer network layer (IPN layer) and at least one layer of a fluoro-containing polymer layer. An IPN complex of a urethane polymer and an acrylic polymer is used in the IPN layer of this multilayer film which is obtained by coating a mixed liquid of an acrylic monomer and an acrylic crosslinking agent and a urethane crosslinked product precursor of a polyol and a polyisocyanate on a substrate and polymerizing and crosslinking the acrylic monomer and the urethane precursor, polyol/polyisocyanate, by respectively heating by a non-interference mode.

| | |
|---|---|
| Patent Reference 1: | JP-A-2004-149811 |
| Patent Reference 2: | JP-A-2006-028416 |
| Patent Reference 3: | JP-A-2007-070401 |
| Patent Reference 4: | JP-A-2003-96140 |
| Patent Reference 5: | JP-A-2003-171411 |
| Patent Reference 6: | JP-A-2004-10661 |
| Patent Reference 7: | JP-T-2001-520127 |

### SUMMARY OF THE INVENTION

According to the above-mentioned Patent Document 7, there is an advantage of hardly generating a limitation (restriction) by the kinds, combination, blending ratio and the like of the monomers to be used, but since the urethane polymerization is a polyaddition reaction which is slow in comparison with a chain reaction like the case of an acrylic system, it has a problem in view of productivity.

When the IPN layer is obtained by making use of the successive reaction and photo-polymerization disclosed in Patent Document 4 in order to solve this problem of productivity, the crosslinked urethane polymer becomes a swelled state in the presence of the acrylic monomer and crosslinking agent, thus causing a problem in that its application to the substrate by coating or casting becomes very difficult to attain due to considerable increase of the syrup viscosity.

That is, a pressure-sensitive adhesive sheet for paint film protection having flexibility as a film, particularly flexibility for the irregular surface and curved surface of vinyl chloride sol coating part, does not exist yet and is in demand.

In addition, from the viewpoint of air escape property of the pressure-sensitive adhesive sheet, it is advantageous to form a large number of the above-mentioned flowing route (air release route) by shortening distance between the above-mentioned grooves. For example, according to the technique described in Patent Document 1, the air escape property is ensured by restricting surface shape of the pressure-sensitive adhesive layer to such a state that groove having a certain volume or more is contained within a circular region of 500 µm in diameter. However, since the pressure-sensitive adhesive layer does not closely contact with an adherend by the above-mentioned groove part, the surface closely contacting with the adherend (adhering surface) among the pressure-sensitive adhesive layer is thinly divided when the distance between grooves (groove pitch) is shortened. In addition, shortening of the distance between grooves (namely, increase of the number of grooves contained per unit area) results in the reduction of total area of the above-mentioned contacting surfaces (net contacting area). Such a fragmentation of contacting surface and reduction of contacting area can become a cause of lowering pressure-sensitive adhesive performance of the pressure-sensitive adhesive sheet (e.g., at least one of the curved surface adhesiveness and releasing strength).

Accordingly, the invention aims at providing a pressure-sensitive adhesive sheet having flexibility as a film, particularly flexibility for the irregular surface and curved surface of vinyl chloride sol coating part. In addition, it also aims at providing a release liner-attached pressure-sensitive adhesive sheet which can ensure appropriate air escape property without inordinately subdividing adhering surface of the pressure-sensitive adhesive sheet

According to the invention, there is provided a release liner-attached pressure-sensitive adhesive sheet including a pressure-sensitive adhesive sheet having a substrate and a pressure-sensitive adhesive layer disposed on the substrate and a release liner arranged on the pressure-sensitive adhesive layer. However, this substrate includes a composite film and the composite film is a film containing at least a urethane polymer. The release liner has a lamination structure (layered structure) and includes at least a layer A which constitutes the surface of the pressure-sensitive adhesive side and a layer B that supports the layer A, In addition, the release liner has an average linear expansion coefficient between 25°C and 40°C of 7 x 10⁻⁵/°C or less. In this connection, the layer A is arranged on the pressure-sensitive adhesive layer of the pressure-sensitive adhesive sheet.

According to the invention, the pressure-sensitive adhesive sheet having the substrate and the pressure-sensitive adhesive layer has a total light transmittance of 80% or more.

According to the invention, it is preferable that the layer A is formed from a polyolefin resin composition which does not contain a phosphorus antioxidant or contains 0.01% by mass or less of the phosphorus antioxidant. Also, it is preferable that the surface positioning on the pressure-sensitive adhesive layer side is divided into a plurality of partial regions by a plurality of ridges extending across the surface, and the height of the ridges can be approximately from 5 to 50 µm. In addition, it is preferable that at least a part (can be substantially all) of the plurality of partial regions has a size where an inscribed circle of the region exceeds 500 µm in diameter. In other words, it is preferable that at least a part of the plurality of partial regions has a size having such an extent that the entire portion of a circle of 500 µm in diameter can be contained in the inside of the outer periphery of the region.

According to the invention, it is preferable that at least the surface of the pressure-sensitive adhesive layer side of the release liner is release-treated with an addition-curable silicone release agent containing a platinum catalyst.

According to the invention, it is preferable that the plurality of ridges have a first ridge group mutually extending in parallel and a second ridge group mutually extending in parallel across with the first ridge group, and that each of the first ridge group and the second ridge group is formed with such a pitch that the distance between bases of adjoining ridges exceeds 500 µm.

In this case, it is preferable that the base of the ridge has a width of 15 µm or more and 200 µm or less.

According to the invention, it is preferable that the layer B is made of paper or a polyethylene terephthalate resin.

According to the invention, it is preferable that the layer A of the release liner is formed by laminating a layer including the polyolefin resin composition on one surface of the layer B.

According to the invention, there can be realized a release liner-attached pressure-sensitive adhesive sheet which can form grooves of a predetermined pattern on the pressure-sensitive adhesive layer surface and can be applied with easy escape of air and good adhesiveness when applied to an adherend at the time of its use.

### BRIEF DESCRIPTION OF THE DRAWINGS

Fig. 1 is a schematic sectional view showing a layer constitution in an embodiment of the release liner-attached pressure-sensitive adhesive sheet of the invention.
Fig. 2 is a schematic sectional view showing a part of the release liner shown in Fig. 1.
Fig. 3 is a schematic plan view showing arrangement of a pressure-sensitive adhesive layer in an embodiment of the pressure-sensitive adhesive sheet of the invention.
Fig. 4 is a schematic plan view showing a part of the pressure-sensitive adhesive sheet shown in Fig. 1.

### DETAILED DESCRIPTION OF THE INVENTION

The following describes the invention. In this connection, the matters which are matters other than the items particularly mentioned in this specification but are matters necessary for carrying out the invention can be understood as designing items of those skilled in the art based on the related art in said field. The invention can be carried out based on the contents disclosed in this specification and technical common knowledge in said field.

The release liner-attached pressure-sensitive adhesive sheet of the invention includes a pressure-sensitive adhesive sheet and a release liner. This pressure-sensitive adhesive sheet has a substrate and a pressure-sensitive adhesive layer, and the release liner is arranged on the pressure-sensitive adhesive layer. The pressure-sensitive adhesive sheet may have a shape having the pressure-sensitive adhesive layer on one side of a sheet-shape substrate (support) or may have a shape having the pressure-sensitive adhesive layer on both sides of the substrate. Those which are called a pressure-sensitive adhesive tape, a pressure-sensitive adhesive label, a pressure-sensitive adhesive film and the like are included in the general idea of the pressure-sensitive adhesive sheet to be called herein.

According to the invention, the substrate constituting the pressure-sensitive adhesive sheet includes a composite film. The composite film of the invention is a film which contains at least a urethane polymer and is a film of a urethane polymer alone or a film which further contains other polymer. It is preferable that this composite film contains a (meth)acrylic polymer and a urethane polymer. In this case, it is preferable that weight ratio of the (meth)acrylic polymer and urethane polymer is within the range of (meth)acrylic polymer/urethane polymer = 1/99 to 80/20. When containing ratio of the (meth)acrylic polymer/urethane polymer is less than 1/99, viscosity of the precursor mixture becomes high, sometimes causing worsening of workability, and when it exceeds 80/20, flexibility and strength as a film cannot be obtained in some cases.

According to the invention, it is preferable that the (meth)acrylic polymer is prepared using at least a (meth)acrylic monomer and an acrylic component containing a monofunctional (meth)acrylic monomer, and particularly, it is preferable to use a monofunctional (meth)acrylic monomer having a homopolymer glass transition temperature (Tg) of 0°C or more. In addition, according to the invention, it is preferable to use an acrylic component which further contains a monofunctional (meth)acrylic monomer having a homopolymer glass transition temperature (Tg) of less than 0°C.

According to the invention, the (meth)acrylic monomer is a (meth)acrylic monomer having carboxyl group, and for example, acrylic acid, methacrylic acid, crotonic acid and the like can be mentioned. Of these, acrylic acid is particularly preferable.

According to the invention, when the composite film precursor is a composite film precursor containing a (meth)acrylic monomer and a urethane polymer, it is preferable that the amount of this (meth)acrylic monomer is 1% by weight or more and 15% by weight or less, preferably 2% by weight or more and 10% by weight or less, based on the composite film precursor. When the amount of the (meth)acrylic monomer is less than 1% by weight, a prolonged period time is required for the reaction, it is very difficult to form a film and it sometimes causes a problem in that strength of the film becomes insufficient. When the amount of the (meth)acrylic monomer exceeds 15% by weight, water absorption of the film becomes large, sometimes causing a problem on water resistance. When the composite film contains a (meth)acrylic polymer and a urethane polymer, the (meth)acrylic monomer greatly exerts influence upon compatibility of the urethane component and acrylic component and therefore is an essential composing element having considerably important function.
In this connection, when called "film" in the invention, it includes a sheet, and when called "sheet", it is a general idea including a film. Also, when expressed as "(meth)acrylic" in the invention like the case of(meth)acrylic polymer or (meth)acrylic monomer, it is a general idea generally referring methacrylic and acrylic. In addition, even in the case of expressing as "acrylic", it is a general idea including methacrylic when there is no problem in view of general common sense.

As the monofunctional (meth)acrylic monomer of the invention having a homopolymer glass transition temperature Tg of 0°C or more, for example, acryloylmorpholine, isobornyl acrylate, dicyclopentanyl acrylate, t-butyl acrylate, cyclohexyl acrylate, lauryl acrylate and the like can be mentioned. These can be used alone or two or more of them concomitantly.

As the monofunctional (meth)acrylic monomer of the invention having a homopolymer glass transition temperature Tg of 0°C or more, it is preferable to use at least one selected from the group consisting of acryloylmorpholine, isobornyl acrylate and dicyclopentanyl acrylate, it is further preferable to use acryloylmorpholine and/or isobornyl acrylate, or acryloylmorpholine and/or dicyclopentanyl acrylate, and it is particularly preferable to use isobornyl acrylate,

The amount of the monofunctional (meth)acrylic monomer having a homopolymer glass transition temperature Tg of 0°C or more is preferably 20% by weight or more and 99% by weight or less, further preferably 30% by weight or more and 98% by weight or less. When the amount of this monofunctional (meth)acrylic monomer is less than 20% by weight, there will be a case in that strength of the film becomes insufficient, and when it exceeds 99% by weight, there will be a case in that the film becomes brittle due to its too increased rigidity.

As the monofunctional (meth)acrylic monomer of the invention having a homopolymer glass transition temperature Tg of less than 0°C, for example, there may be mentioned n-butyl acrylate, 2-ethylhexyl acrylate, isooctyl acrylate, isobutyl acrylate, 2-methoxyethyl acrylate, tetrahydrofurfuryl acrylate, phenoxyethyl acrylate, ethoxyethyl acrylate, 3-methoxybutyl acrylate and the like. These can be used alone or two or more of them concomitantly.
According to the invention, it is particularly preferable to use n-butyl acrylate as the monofunctional (meth)acrylic monomer having a homopolymer glass transition temperature Tg of less than 0°C.

Though the monofunctional (meth)acrylic monomer having a homopolymer glass transition temperature Tg of less than 0°C may not be contained (its containing amount is 0% by weight), its amount when contained is preferably larger than 0% by weight and 50% by weight or less, further preferably larger than 0% by weight and 45% by weight or less, based on the acrylic component. When the amount of this monofunctional (meth)acrylic monomer exceeds 50% by weight, there will be a case of causing a problem in that strength of the film becomes insufficient.

Kinds, combination, using amounts and the like of the (meth)acrylic monomers are decided accordingly by taking into consideration their compatibility with urethane, polymerization property at the time of photo-curing such as by radioactive rays and characteristics of the obtained polymer.

According to the invention, the (meth)acrylic monomer may be copolymerized with other monomers such as vinyl acetate, vinyl propionate, styrene, acrylamide, methacrylamide, a mono- or di-ester of maleic acid, and a derivative thereof, N-methylolacrylamide, glycidyl acrylate, glycidyl methacrylate, N,N-dimethylaminoethyl acrylate, N,N-dimethylaminopropyl methacrylamide, 2-hydroxypropyl acrylate, N,N-dimethylacrylamide, N,N-diethylacrylamide, imidoacrylate, N-vinylpyrrolidone, oligoester acrylate, c-caprolactane acrylate, dicyclopentanyl (meth)acrylate, dicyclopentenyl (meth)acrylate, methoxylated cyclododecatriene acrylate, methoxyethyl acrylate and the like. In this connection, kinds and using amounts of these monomers to be copolymerized are decided accordingly by taking characteristics and the like of the composite film.

In addition, other polyfunctional monomers can also be added within such a range that the characteristics are not impaired. As the polyfunctional monomers, there may be mentioned ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylate, epoxy acrylate, polyester acrylate and the like, of which trimethylolpropane tri(meth)acrylate is particularly preferable.

The polyfunctional monomer can be contained in an amount of 1 part by weight or more and 20 parts by weight or less based on 100 parts by weight of acrylic monomers. Cohesive strength of composite film is sufficient when containing amount of the polyfunctional monomer is 1 part by weight or more, and when it is 20 parts by weight or less, elastic modulus does not become too high so that it can follow irregularity of the adherend surface.

The urethane polymer is obtained by allowing a diol and a diisocyanate to undergo the reaction. A catalyst is generally used in the reaction of the hydroxyl group of a diol with an isocyanate, but according to the invention, the reaction can be accelerated without using dibutyltin dilaurate, tin octenoate or the like catalyst which generates environmental load.

As the low molecular weight diol, there may be mentioned a divalent alcohol such as ethylene glycol, diethylene glycol, propylene glycol, butylene glycol, hexamethylene glycol and the like.

Also, as the high molecular weight diol, there may be mentioned a polyether polyol obtained by carrying out addition polymerization of ethylene oxide, propylene oxide, tetrahydrofuran or the like, a polyester polyol containing a condensation polymerization product of an alcohol such as the above-mentioned divalent alcohol, 1,4-butanediol or 1,6-hexanediol and a divalent basic acid such as adipic acid, azelaic acid or sebacic acid, an acrylic polyol, a carbonate polyol, an epoxy polyol, a caprolactone polyol and the like. Of these, for example, polyoxy tetramethylene glycol (PTMG), polyalkylene carbonate diol (PCD) and the like are suitably used.

As the acrylic polyol, a copolymer of a hydroxyl group-containing substance and an acrylic monomer can be mentioned in addition to the copolymer of monomers having hydroxyl group. As the epoxy polyol, an amine modified epoxy resin and the like may be mentioned.

According to the invention, the urethane polymer does not contain a crosslinking structure. It is preferable that the diol to be used in the formation of urethane polymer is a filamentous (linear) diol. However, as long as it satisfies the condition that a crosslinking structure is not formed in the urethane polymer, the diol may be a side chain diol or a branch structure-containing diol. That is, the urethane polymer which constitutes the composite film of the invention does not contain a crosslinking structure and therefore is completely different structurally from the IPN structure.

According to the invention, the above-mentioned diols can be used alone or in combination, by taking the solubility in acrylic monomers, reactivity with isocyanate and the like into consideration. When strength is required, it is effective to increase amount of urethane hard segments by a low molecular weight diol. When elongation is important, it is preferable to use a diol having large molecular weight, alone. In addition, the polyether polyol is generally inexpensive and has good water resistance and the polyester polyol has high strength. According to the invention, kind and amount of the polyol can be freely selected depending on the purpose, and kind, molecular weight and using amount of the polyol can be selected accordingly also from the viewpoint of the characteristics of the object matter (e.g., a support, a coat layer) and the like, reactivity with isocyanate, compatibility with acrylic substances and the like.

As the diisocyanate, aromatic, aliphatic and alicyclic diisocyanates and dimers, trimers and the like of these diisocyanates can be mentioned. As the aromatic, aliphatic and alicyclic diisocyanates, there may be mentioned for example tolylene diisocyanate (TDI), diphenylmethane diisocyanate (MDI), hexamethylene diisocyanate, xylylene diisocyanate (XDI), hydrogenated xylylene diisocyanate (HXDI), isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,2,4-trimethylhexamethylene diisocyanate, cyclohexane-1,4-diisocyanate, dicyclohexylmethane-4,4-diisocyanate, 1,3-bis(isocyanatomethyl)cyclohexane, methylcyclohexane diisocyanate, m-tetramethylxylylene diisocyanate and the like. In addition, dimers and tetramers thereof and polyphenylmethane diisocyanate are used. As the tetramers, isocyanurate type, buret type, allophanate type and the like can be mentioned and optionally used.

These diisocyanates can be used alone or in combination thereof. Kinds, combinations and the like of diisocyanate may be selected accordingly from the viewpoint of the characteristics of the object (e.g., support, coat layer) to be applied (to be coated or the like) onto the composite film and the like, solubility in acrylic monomers, reactivity with hydroxyl group and the like.

According to the invention, it is preferable that the urethane polymer is formed using at least one kind of diisocyanate selected from the group consisting of hexamethylene diisocyanate (HDI), hydrogenated tolylene diisocyanate (HTDI), hydrogenated 4,4-diphenylmethane diisocyanate (HMDI), isophorone diisocyanate (IPDI) and hydrogenated xylylene diisocyanate (HXDI).

Regarding the amounts of the diol component and diisocyanate component to be used for forming the urethane polymer in the invention, using amount of the diol component is preferably from 1.1 to 2.0, further preferably from 1.15 to 1.35, as NCO/OH (equivalent ratio) based on the diisocyanate component. When the NCO/OH (equivalent ratio) is less than 1.1, the film strength is apt to lower. Also, when the NCO/OH (equivalent ratio) is 2.0 or less, elongation and flexibility can be ensured sufficiently.

A hydroxyl group-containing acrylic monomer may be added to the urethane polymer. By adding a hydroxyl group-containing acrylic monomer, (meth)acryloyl group can be introduced into the molecular terminus of urethane prepolymer, so that copolymerization property with the (meth)acrylic monomer is imparted, compatibility of the urethane component with the acrylic component is increased and improvement of the S-S characteristics such as tension strength can also be made. As the hydroxyl group-containing acrylic monomer, hydroxyethyl (meth)acrylate, hydroxypropyl (meth)acrylate, hydroxybutyl (meth)acrylate, hydroxyhexyl (meth)acrylate and the like are used. Using amount of the hydroxyl group-containing acrylic monomer is preferably from 0.1 to 10 parts by weight, further preferably from 1 to 5 parts by weight, based on 100 parts by weight of the urethane polymer.

As occasion demands, generally used additive agents such as an ultraviolet ray absorber, an aging inhibitor, a filler, a pigment, a coloring agent, a flame retardant, an antistatic agent, a light stabilizer and the like can be added to the composite film within such a range that the effect of the invention is not impaired. These additive agents are used in usual amounts in response to their kinds. These additive agents may be added in advance before the polymerization reaction of diisocyanate with diol or may be added before respectively polymerizing the urethane polymer and (meth)acrylic monomer.

When the composite film of the invention is a composite film including a (meth)acrylic polymer and a urethane polymer, the composite film can be formed by, for example, using an acrylic monomer as a diluent, forming a urethane polymer by carrying out reaction of a diol with a diisocyanate in this acrylic monomer, coating a mixture containing the acrylic monomer and urethane polymer as the main components on a temporary support, coat layer (release-treated according to the necessity) or the like, carrying out curing by irradiating ionizing radial rays such as α rays, β rays, γ rays, neutron rays and electron rays, radial rays such as ultraviolet rays, visible light or the like, and then releasing and removing the temporary support or the like. Alternatively, it can be obtained in a form in which the composite film is laminated on a coat layer or the like. The coat layer is described later.

Specifically, a composite film can be obtained by dissolving a diol in an acrylic monomer, carrying out viscosity adjustment by adding a diisocyanate or the like thereto and allowing it to react with the diol, coating this on a support or the like or, as occasion demands, on the release-treated surface of the support or the like, and then curing the product using a low pressure mercury lamp or the like. In this method, the acrylic monomer may be added in one portion, or by dividing it into several times, during the urethane synthesis. Alternatively, the diisocyanate may be dissolved in the acrylic monomer and then allowed to react with the diol. According to this method, molecular weight is not limited and a high molecular weight polyurethane can be formed too, so that molecular weight of the finally obtained urethane can be designed to an desired size.

In this case, in order to avoid inhibition of the polymerization by oxygen, oxygen may be blocked by putting a release-treated sheet (separator or the like) on the mixture coated on a support or the like, or the oxygen concentration may be lowered by putting the base materials into a container filled with an inert gas.

According to the invention, kinds of radial rays and the like and kinds of the lamp to be used in the irradiation, and the like can be selected accordingly, and low pressure lamps such as a fluorescent chemical lamp, a black light, a germicidal lamp and the like and high pressure lamps such as a metal halide lamp, a high pressure mercury lamp and the like can be used.

The irradiation energy of ultraviolet rays and the like can be set according to the characteristics of the required film. In general, the irradiation energy of ultraviolet rays is from 100 mJ/cm² to 5,000 mJ/cm², preferably from 1,000 mJ/cm² to 4,000 mJ/cm², further preferably from 2,000 mJ/cm² to 3,000 mJ/cm². When the irradiation energy of ultraviolet rays is smaller than 100 mJ/cm², there will be a case in which sufficient conversion cannot be obtained, and when it is larger than 5,000 mJ/cm², there will be a case of causing deterioration.

In addition, the temperature at the time of irradiating ultraviolet rays and the like is not particularly limited and can be set accordingly, but when the temperature is too high, a termination reaction by heat of polymerization is apt to occur which is apt to become a cause of the characteristics lowering, so that it is generally 70°C or less, preferably 50°C or less and further preferably 30°C or less.

According to the invention, a photo-polymerization initiator is contained in the mixture which contains at least a urethane polymer (e.g., a mixture containing a urethane polymer and an acrylic monomer as the main components). As the photo-polymerization initiator, a benzoin ether such as benzoin methyl ether and benzoin isopropyl ether, a substituted benzoin ether such as anisole methyl ether, a substituted acetophenone such as 2,2-diethoxyacetophenone, 2,2-dimethoxy-2-phenylacetophenone, a substituted alpha-ketol such as 1-hydroxy-cyclohexyl-phenyl-ketone and 2-methyl-2-hydroxypropiophenone, an aromatic sulfonyl chloride such as 2-naphthalenesulfonyl chloride and an optically active oxime such as 1-phenyl-1,1-propanedione-2-(o-ethoxycarbonyl)-oxime are suitably used.

Thickness of the substrate according to the invention can be selected according to the purpose and the like, for example the kinds, positions and the like of the object to be covered and protected, and therefore is not particularly limited, but is preferably 100 µm or more, further preferably 150 µm or more, particularly 200 µm or more. Also, thickness of the substrate is preferably 1,000 µm or less, further preferably 750 µm or less, particularly preferably 500 µm or less. Thickness of the composite film which constitutes the substrate, for example in the case of its chipping application for protecting an automobile body, is preferably from about 50 µm to about 500 µm, further preferably from about 100 µm to about 300 µm.

The pressure-sensitive adhesive sheet of the invention includes a substrate and a pressure-sensitive adhesive layer, and the substrate includes a composite film keeps the pressure-sensitive adhesive layer. The pressure-sensitive adhesive layer is present on one side or both sides of the substrate, and it may be directly laminated on the substrate or may be laminated in such a manner that other layer and the like are present between them. The pressure-sensitive adhesive which forms the pressure-sensitive adhesive layer is not particularly limited, and for example, one or two or more kinds can be used by selecting from conventionally known various pressure-sensitive adhesives such as of an acrylic, a polyester, a urethane, a polyether, a rubber, a silicone, a polyamide, a fluorine and the like. In addition, any form of the pressure-sensitive adhesive can be used without particular limitation, and for example, there can be used various form of pressure-sensitive adhesives such as a solvent type pressure-sensitive adhesive, an emulsion type pressure-sensitive adhesive, a water-soluble pressure-sensitive adhesive and an ultraviolet ray curing type pressure-sensitive adhesive. As occasion demands, these pressure-sensitive adhesives can contain one or two or more general additive agents such as a tackifier, a viscosity adjusting agent, a leveling agent, a plasticizer, a coloring agent such as a pigment and a dye, a stabilizer, an antiseptic, an aging inhibitor and an antistatic agent. When an adhesive property at low temperature, a retaining property at high temperature, a cost side and the like are taken into consideration, an acrylic pressure-sensitive adhesive which uses an acrylic polymer as the base polymer (main component of the polymers contained in the pressure-sensitive adhesive) is preferable.

The acrylic polymer to be used herein is typically a (co)polymer which includes an alkyl (meth)acrylate, namely (meth)acrylic acid ester of an alkyl alcohol, as the main monomer. For example, preferred is a pressure-sensitive adhesive layer having an acrylic pressure-sensitive adhesive mainly including an acrylic polymer which includes, as the main monomer, an alkyl alcohol (meth)acrylic acid ester having from 2 to 15 carbon atoms (more preferably from 4 to 10 carbon atoms).

Forming method of the pressure-sensitive adhesive is not particularly limited too, and a method in which a pressure-sensitive adhesive is directly applied to a substrate and dried, a method in which a pressure-sensitive adhesive layer is formed in advance by applying a pressure-sensitive adhesive to a release paper (e.g., a release liner) and this pressure-sensitive adhesive layer is laminated on a substrate (composite film), and the like can be employed. Also employable is a method in which a radiation curable pressure-sensitive adhesive is applied to a substrate, and the substrate and pressure-sensitive adhesive layer are simultaneously cured and formed by applying a radiation to both of the pressure-sensitive adhesive layer and film. In this connection, in this case, the pressure-sensitive adhesive layer and substrate can also be applied to form a multilayer construction.

The pressure-sensitive adhesive layer can be formed by, for example, using an acrylic pressure-sensitive adhesive composition prepared by blending an acrylic polymer of the above-mentioned (co)polymer composition with, as occasion demands, a tackifier, a crosslinking agent, a solvent and the like.

It is preferable that thickness of the pressure-sensitive adhesive layer is similar to the above-mentioned height of ridges or thicker than that, and for example, it is preferably from about 5 µm to about 150 µm, more preferably from about 10 µm to about 100 µm, particularly preferably from about 20 µm to about 50 µm.

Regarding the substrate which constitutes the pressure-sensitive adhesive sheet of the invention, a surface coat layer can be arranged on one side of the composite film within such a range that it does not spoil the effect of the invention such as flexibility and the like. From the viewpoint of weather resistance, flexibility and the like, it is preferable that the surface coat layer contains fluorine or urethane. For example, it is preferable to arrange a fluoroethylene vinyl ether layer as the surface coat layer. By arranging a surface coat layer, it becomes possible to provide glossiness, abrasion resistance, antifouling property, water repellency and the like characteristics, in addition to the effect to suppress deterioration of the composite film itself. In this connection, when the substrate has a surface coat layer, it is preferable to make a construction in which one side of the composite film has the surface coat layer and the other side has the pressure-sensitive adhesive layer.

Thickness of the surface coat layer is preferably from 2 µm to 50 µm, more preferably from 5 µm to 40 µm, further preferably from 8 µm to 30 µm. When thickness of the surface coat layer is less than 2 µm, defective regions such as pin holes where the coat layer is not formed are apt to generate and there may be a case in which characteristics of the surface coat layer cannot be fully exerted. Also, when it exceeds 50 µm, there may be a case in which physical properties of the surface coat layer cause lowering of physical properties of the composite film.

According to the substrate of the invention, other film can be laminated on one side or both sides of the composite film within such a range that it does not spoil the effect of the invention such as flexibility and the like. As the material which forms other film, there may be mentioned, for example, a polyester resin such as polyethylene terephthalate (PET), a polyolefin resin such as polyethylene (PE), polypropylene (PP) and the like and a thermoplastic resin such as polyimide (PI), polyether ether ketone (PEEK), polyvinyl chloride (PVC), a polyvinylidene chloride resin, a polyamide resin, a polyurethane resin, a polystyrene resin, an acrylic resin, a fluorine resin, a cellulose resin, a polycarbonate resin and the like, as well as a thermosetting resin and the like. In this connection, when the above-mentioned surface coat layer is arranged, it is preferable to arrange the surface coat layer on the outermost layer position of the substrate.

In addition to the above-mentioned substrate and the above-mentioned pressure-sensitive adhesive layer, the pressure-sensitive adhesive sheet of the invention may further have an application sheet. The application sheet is effectively used in order to improve pasting work of the pressure-sensitive adhesive sheet, for example for determining the pasting position and the like. The application sheet is laminated on the opposite side of the side where the pressure-sensitive adhesive layer is formed. In this connection, in the case of a form in which the substrate includes a surface coat layer, the application sheet is laminated on the surface coat layer.

As the application sheet to be used in the invention, for example, there may be mentioned a pressure-sensitive adhesive sheet and the like, which is prepared by applying a rubber pressure-sensitive adhesive, an acrylic pressure-sensitive adhesive and the like to films or the like including an olefin resin such as polypropylene (PP), polyethylene (PE) and the like, a vinyl chloride resin, a polyester resin and the like.

According to the invention, the pressure-sensitive adhesive sheet has a total light transmittance of preferably 80% or more, further preferably 85% or more, particularly preferably 90% or more. When total light transmittance of the pressure-sensitive adhesive sheet is 80% or more, superior transparency can be exerted when laminated on an adherend and decorative designing of appearance can be satisfied.

The release liner constituting the release liner-attached pressure-sensitive adhesive sheet of the invention has a laminated structure and has at least a layer A which constitutes the surface of the pressure-sensitive adhesive layer side and a layer B that supports the layer A.

Thickness of the release liner (a thickness measured from the apex of ridges, namely a thickness including the height of ridges) is not particularly limited, but is for example from about 50 µm to about 500 µm, preferably from about 50 µm to about 300 µm, further preferably from about 100 µm to about 300 µm.

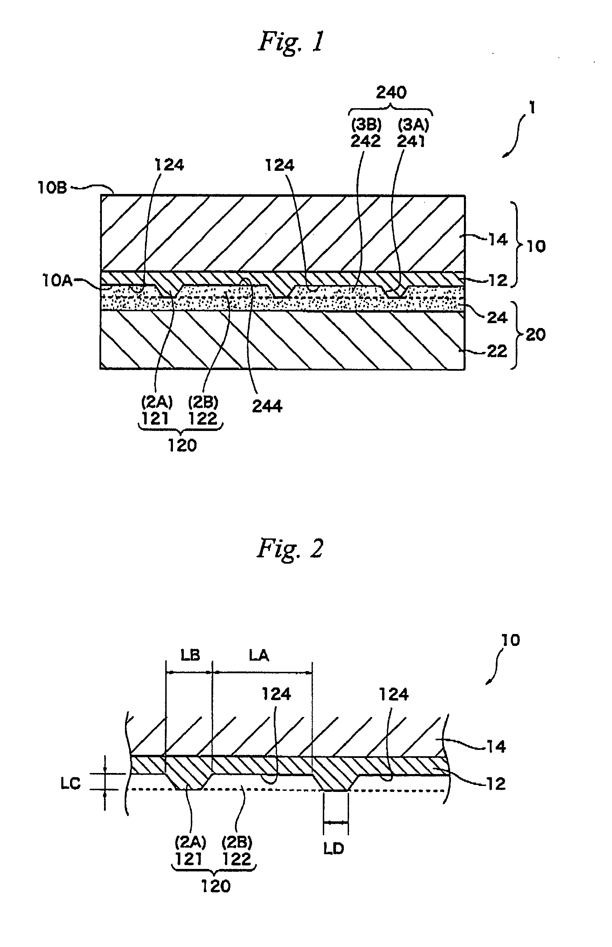

It is possible that the release liner-attached pressure-sensitive adhesive sheet, as disclosed herein, for example has a sectional structure schematically shown in Fig. 1. The release liner-attached pressure-sensitive adhesive sheet 1 shown in Fig. 1 has a pressure-sensitive adhesive sheet 20 having a substrate 22 and a pressure-sensitive adhesive layer 24 arranged on one side of the substrate and a release liner 10 arranged on the pressure-sensitive adhesive layer 24.
The release liner 10 is a layered structure having at least a layer A (surface layer) 12 which constitutes the surface of the pressure-sensitive adhesive layer side and a layer B (support layer) 14 that supports the layer A. The release liner 10 may have a three layer structure in which a backside layer (not illustrated) is arranged on the backside of the support layer 14 (opposite side of the side on which the surface layer 12 is arranged).

Arranged on a pressure-sensitive adhesive layer side surface 10A of the release liner 10 are a first ridge group 121 including a plurality of ridge 2A extending in straight lines across the surface 10A in one direction (a direction vertical to the space of Fig. 1) and a second ridge group 122 including a plurality of ridge 2B extending in straight lines across the surface 10A in a direction perpendicular to the ridge 2A (right and left directions of Fig. 1). The ridge 2A and ridge 2B are arranged mutually in parallel at respective pitches (typically at almost the same pitches). In addition, a generally grid-like convex part 120 is formed through the communication of the ridge 2A and ridge 2B at the intersecting point. In other words, the pressure-sensitive adhesive layer side surface 10A of the release liner 10 is partitioned into grids by the first ridge group 121 and the second ridge group 122. By this, a plurality of partial region 124 surrounded (divided) crosswise by the ridge 2A and ridge 2B is formed. This pressure-sensitive adhesive layer side surface 10A is provided with release property.
In this connection, backside 108 of the release liner 10 may be smooth; or an irregular shape similar to or different from that of the pressure-sensitive adhesive layer side surface 10A may be added to the entire part or a partial area thereof as occasion demands. Such a backside 10B may be not release-treated or may be release-treated as occasion demands, and for example, it may be release-treated in the same manner as in the above-mentioned surface 10A.

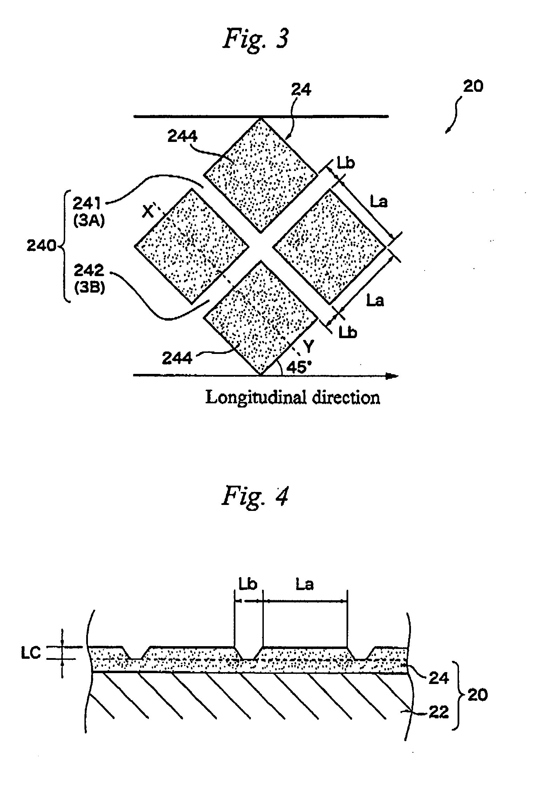

By reflecting the shape of the pressure-sensitive adhesive layer side surface 10A, a first groove group 241 having a plurality of groove 3A and a second groove group 242 having a plurality of groove 3B extending in straight lines across perpendicularly to the groove 3A is arranged on the surface of the pressure-sensitive adhesive layer 24 constituting the pressure-sensitive adhesive sheet 20. In addition, a concave 240 having a grid shape as a whole is formed through the communication (contact) of the groove 3A and groove 3B at intersections. The part surrounded crosswise by the groove 3A and groove 3B becomes a relatively projected initial adhesion region (adhesion surface) 244 (cf. Fig. 3).

When the surface of the pressure-sensitive adhesive layer 24 having the above-mentioned concave 240 having a grid shape is exposed by pealing off the release liner 10 from the pressure-sensitive adhesive sheet 20 having such a construction and the pressure-sensitive adhesive layer 24 is applied to an adherend under an appropriate pressure, the initial adhesion region 244 is closely adhered to the adherend, while an air escape pathway (fluid passage) extending crosswise is formed between the grid-shape concave 240 and the adherend surface. Through the passage, the air which can be contaminated at the time of application of the pressure-sensitive adhesive sheet 20 can be driven out into the outside moiety.

In this case, when surface shape of the release liner 10 (e.g., one or two or more of the sectional shape, linearity, continuity, pitch and the like of the ridges 2A and 2B) is contorted from the desired shape (designed shape), the contortion is also reflected to the shape of the grooves 3A and 3B. As a result, there is a possibility that smooth flow of the air toward the outside moiety is obstructed due to partial narrowing, than the designed shape, of the air escape passage to be formed by the grooves 3A and 3B and disorder of the longitudinal direction shape of the passage, and further that the grooves partially become unable to contribute to the purge of air due to generation of interruption (blocking) in the passage. Such phenomena reduce application efficiency of the above-mentioned grooves as the air escape passage and further reduce air escape property of the pressure-sensitive adhesive sheet. Reduction of the air escape property by the above-mentioned phenomena is particularly apt to be actualized when a relatively soft material is used as a pressure-sensitive adhesive which constitutes the pressure-sensitive adhesive layer or when pasting of the pressure-sensitive adhesive sheet is carried out at a relatively high atmospheric temperature (e.g., around 35°C).

According to the release liner-attached pressure-sensitive adhesive sheet of the invention, the grooves 3A and 3B can be formed with high accuracy by the use of a release liner 10 fitted for the high accuracy of the surface shape, and by this, the groves can be functioned as the air escape passage more efficiently (without futility). Accordingly, good air escape property can be ensured without requiring too much fractionization of the adhesion surface 244.

Shape of the section of each ridge (vertical section to the extending direction of the ridge) may be a trapezoid shape for example as shown in Fig. 1 (a trapezoid shape in which the upper side is shorter than the lower side) or may be various shapes such as a rectangle, a reverse V shape, a reverse U shape, a semicircular shape and the like. Height of the above-mentioned ridge (LC in Fig. 2) could be for example from about 5 µm to about 50 µm. When the height LC of the ridge is set to an approximate level of from about 15 µm to about 50 µm (preferably from about 20 µm to about 50 µm, for example from about 20 µm to about 30 µm), it is possible to realize a pressure-sensitive adhesive sheet which shows further excellent air escape property. In this connection, it is preferable that the height LC of the above-mentioned ridge is similar to or smaller than the thickness of the pressure-sensitive adhesive layer, and it is appropriate in general to set it to a level of from about 30% to about 90% (for example from about 50% to about 80%) of the thickness of the pressure-sensitive adhesive layer.

Width (LB in Fig. 2) of the base (bottom) of the above-mentioned ridge can be for example from about 15 µm to about 200 µm (preferably from about 30 µm to about 150 µm, further preferably from about 25 µm to about 80 µm). It is preferable that width of the apex of the ridge (LD in Fig. 2) is from about 1 µm to about 50 µm (typically from about 3 µm to about 30 µm, however shorter than length of LB). Sectional shapes of respective ridges (height, width and the like) may be the same or different from one another. For example, sectional shapes of respective ridges can be set to about the same level. In addition, ridges having mutually different sectional shapes may be arranged regularly or at random. Distance between the bases of ridges (LA in Fig. 2) constituting the above-mentioned ridge group is preferably more than 500 µm (typically more than 500 µm to 1500 µm), preferably from about 550 µm to about 1250 µm. The above-mentioned distance LA between bases may be about 600 µm or more (typically from about 600 µm to about 1250 µm), and said distance LA may be about 800 µm or more (typically from about 800 µm to about 1200 µm). In the case of a construction having mutually crossing a plurality of ridge group, sectional shapes of individual ridges belonging to each ridge group may be the same or different from one another. Also, pitches of ridges belonging to each ridge group may be the same or different from one another.
In this connection, Fig. 4 shows conditions of the pressure-sensitive adhesive sheet for example when cut by the broken line XY in Fig. 3, namely the partial sectional view of pressure-sensitive adhesive sheet shown in Fig. 1, wherein La is the width of convex part of the pressure-sensitive adhesive layer and is a part reflected from LA of the release liner, Lb is the width of the upper surface of concave part of the pressure-sensitive adhesive layer and is a part reflected from LB of the release liner, and Lc is the depth of concave part of the pressure-sensitive adhesive layer and is a part reflected from LC of the release liner.

According to the techniques disclose herein, it is preferable that the layer which constitutes the pressure-sensitive adhesive layer side surface of the release liner (layer A) is formed from a polyolefin composition which does not contain a phosphorus antioxidant or contains the antioxidant in an amount of about 0.01 % by mass or less.
The polyolefin resin composition of this case means a resin composition which uses, as its base polymer (main component among polymer components), an olefin polymer that uses olefin as the main monomer (main composing monomer). The above-mentioned olefin polymer may be, for example, a homopolymer of α-olefin having from 2 to 10 carbon atoms or a copolymer which uses the olefin as the main composing monomer.

The polyolefin resin composition constituting the layer A may be, for example, a polypropylene resin (PP resin) composition which uses a propylene polymer as the base polymer. In this case, general idea of the above-mentioned "propylene polymer" may include any one of a propylene homopolymer (homopolypropylene, typically an isotactic polypropylene), a copolymer of propylene with other olefin (e.g., one or two or more kinds selected from α-olefin having 2 or from 4 to 10 carbon atoms) and a copolymer of propylene with other olefin and/or a monomer other than olefin. The copolymer may be a random copolymer (random polypropylene) or a block copolymer. In addition, it may also be a PP resin composition which contains two or more propylene copolymers (e.g., a combination of a homopolypropylene and a random polypropylene, a combination of two random polypropylene having different copolymer compositions, and the like) at an arbitrary ratio.

The polyolefin system resin composition constituting the layer A may also be a polyethylene resin (PE resin) composition including an ethylene polymer as the base polymer. The above-mentioned ethylene polymer may be a homopolymer of ethylene, may be a copolymer of ethylene with other olefin (e.g., one or two or more kinds selected from α-olefins having from 3 to 10 carbon atoms) or may be a copolymer of ethylene with other olefins and/or monomers other than olefin (e.g., one or two or more kinds selected from ethylenic unsaturated monomers such as vinyl acetate, acrylic acid, methacrylic acid, methyl acrylate, ethyl acrylate and the like). As the above-mentioned ethylene polymer, it is possible to use any one of so-called low density polyethylene (LDPE), linear low density polyethylene (LLDPE), high density polyethylene (HDPE) and the like.

As occasion demands, the above-mentioned polyolefin resin composition may secondarily contain a polymer component other than the base polymer. Such a secondary polymer component may be various polymers compatible or not compatible with the base polymer. Containing ratio of the secondary polymer component (when two or more secondary polymer components are contained, their total amount) may for example be within the range of 70 parts by mass or less (typically from 0.1 part by mass to 70 parts by mass), preferably 50 parts by mass (typically from 0,1 part by mass to 50 parts by mass), more preferably 20 parts by mass or less (typically from 0.1 part by mass to 20 parts by mass), based on 100 parts by mass of the base polymer. The above-mentioned containing ratio of secondary polymer component may be 5 parts by mass or less (typically from 0.1 part by mass to 5 parts by mass) based on 100 parts by mass of the base polymer.

In a preferred embodiment of the release liner, the above-mentioned layer A is formed by a PP resin composition containing an ethylene polymer as the above-mentioned secondary polymer component (e.g., LDPE, typically LLDPE) in addition to a propylene polymer (e.g., homopolypropylene). Containing amount of the ethylene polymer may be, for example, from about 1 part by mass to about 50 parts by mass (preferably from about 5 parts by mass to about 20 parts by mass) based on 100 parts by mass of the propylene polymer. For example, a PP resin composition which is prepared by blending a propylene polymer with an ethylene polymer and does not substantially contain other polymer components can be suitably used.

In this connection, a PP resin generally have higher heat resistance in comparison with a PE resin. Thus, a release liner in which the layer A is made of a PP resin has an advantage in that the thermal distortion when heated (e.g., heated at about 145°C) at the time of release treatment can be suppressed with further higher degree. On the other hand, a release liner in which the layer A is made of a PE resin has an advantage in that the formability at the time of providing a predetermined surface shape (e.g., carrying out embossing) is high. By the release liner provided with the layer A made of a PE resin, the shape accuracy improving effect by the application of the invention is further suitably exerted.

As occasion demands, the above-mentioned polyolefin resin composition can contain various components generally known as additive agents for polyolefin resin composition, within such a range that the effect of the invention is not significantly spoiled. As such a component, an antioxidant, a neutralizing agent, a heat stabilizer, a light stabilizer, an ultraviolet ray absorbent, an antistatic agent, a slipping agent, an antiblocking agent, a coloring agent (a pigment, a dye and the like) and the like can be exemplified. For example, it may be a PP composition containing TiO₂ or the like pigment at a ratio of from about 5 parts by mass to about 20 parts by mass based on 100 parts by mass of the propylene polymer.

As the above-mentioned antioxidant, various conventionally known antioxidants such as of a phenol, a phosphorus (phosphite), sulfur, amine antioxidants and the like can be used. As examples of the phenol antioxidant, there may be mentioned a monophenol antioxidant such as 2,6-di-t-butyl-4-methylphenol, 2,6-di-t-tert-butyl-4-ethylphenol and the like; a bisphenol antioxidant such as 2,2'-methylenebis(4-methyl-6-t-butylphenol), 2,2'-methylenebis(4-ethyl-6-t-butylphenol), 4,4'-butylidenebis(3-methyl-6-t-butylphenol), 4,4'-thiobis(3-methyl-6-t-butylphenol) and the like; and a high molecular phenol antioxidant such as 1,3,5-trimethyl-2,4-6-tris(3,5-di-t-butyl-4-hydroxybenzyl)benzene, tetrakis-[methylene-3-(3',5'-di-t-butyl-4'-hydroxyphenyl) propionate]methane, 1,1,3-tris(2-methyl-4-hydroxy-5-t-butylphenyl)butane and the like. As example of the phosphorus (phosphite) antioxidants, there may be mentioned tris(2,4-di-t-butylphenyl)phosphite, tris(nonylphenyl) phosphite, triphenyl phosphite, distearylpentaerythritol diphosphite and the like. As the sulfur antioxidant, there may be mentioned dilauryl-3,3'-thiodipropionate, dimyristyl-3,3' -thiodipropionate, distearyl-3,3'-thiodipropionate, pentaerythritoltetralauryl thiopropionate and the like. As the amine antioxidant, there maybe mentioned phenyl-α-naphthylamine, diphenylamine and the like.

Such an antioxidant can be used as a single species alone or as an optional combination of two or more species. However, when the polyolefin resin composition which forms the above-mentioned layer A contains a phosphorus antioxidant (including a case of joint use with other antioxidant), containing ratio of the phosphorus antioxidant in the above-mentioned composition is set to about 0.01% by mass as the upper limit. This is because when a release agent (particularly, an addition-curable silicone release agent which uses platinum as the curing catalyst (to be referred sometimes to as "specified release agent" hereinafter)) is coated on the surface of a layer formed from a polyolefin resin composition containing a phosphorus antioxidant in an amount larger than the above-mentioned ratio, curing of the release agent can be inhibited by the above-mentioned antioxidant. When such a curing inhibition (in other words, poor curing of release agent) occurs, amount of the uncured release agent is apt to increase. The uncured release agent shifts to the pressure-sensitive adhesive layer of pressure-sensitive adhesive sheet and causes deficiency such as staining of applying object (adherend) of the pressure-sensitive adhesive sheet. Also, shifting of the above-mentioned uncured release agent to the pressure-sensitive adhesive layer exerts disadvantageous influence upon the pressure-sensitive adhesion capacity (curved surface adhesive property, adhesive property, aggregation property and the like). In addition, when the release agent is poor in curing, its original release capacity is not exerted so that there may be a case in which the release strength (liner release strength) in separating release liner from the pressure-sensitive adhesive sheet becomes too high. The significance of appropriately controlling the above-mentioned liner release strength by preventing curing inhibition of release agent is particularly large in the case of a release liner having an embodiment in which ridges are formed on the pressure-sensitive adhesive layer side surface and a release liner for a release liner-attached pressure-sensitive adhesive sheet supposed to be pasted using a pasting device (pasting jig) for continuously pasting the pressure-sensitive adhesive sheet to an adherend while the release liner is released from the pressure-sensitive adhesive sheet.

From such a viewpoint of preventing curing inhibition, it is preferable that the polyolefin resin composition which constitutes the layer A does not substantially contain a phosphorus antioxidant, but when various factors for practical use (cost, processability and the like) are taken into consideration, a polyolefin resin composition which contains a phosphorus antioxidant at such a degree of ratio that the curing inhibition does not become a problem (a ratio of about 0.01% by mass or less, for example from 0.005% by mass or more and less than 0.01% by mass) can also be employed preferably.
From the above-mentioned viewpoint of preventing curing inhibition, it is preferable that the polyolefin resin composition which constitutes the layer A does not contain any one of the phosphorus antioxidant, sulfur antioxidant and amine antioxidant or that the total containing ratio of these antioxidants is about 0.01% by mass or less (typically from 0.001% by mass to 0.01% by mass, for example 0.005% by mass or more and less than 0.01% by mass).

It is preferable that the above-mentioned polyolefin resin composition which constitutes the layer A does not substantially contain a nucleant agent (e.g., a phosphoric acid ester salt, a carboxylic acid ester salt, a sorbitol nucleant agents and the like). This is because when a release agent (particularly the above-mentioned specified release agent) is coated on the surface of a layer formed from a composition containing a nucleant agent, curing of the release agent can be inhibited by the above-mentioned nucleant agent.

It is preferable that the pressure-sensitive adhesive layer side surface of the release liner concerned in the invention is release treated with a release agent. The release agent (also called mold release agent) may be various conventionally known release agents such as a silicone release agent, a fluorine release agent, a long chain alkyl release agent, a fatty acid amide release agent, silica powder and the like. As a release agent preferable for the invention, a thermosetting silicone release agent can be exemplified. As the thermosetting silicone release agent, it is possible to use both of the addition curable release treating agent and condensation curable release treating agent, of which an addition curable silicone release treating agent is preferable. In this type of release treating agent, a platinum (Pt) catalyst or a rhodium (Rh) catalyst is generally used as a curing catalyst. From the viewpoint of easy curing and the like, a platinum catalyst is generally used more preferably.

In a preferred embodiment, an addition-curable silicone release agent having platinum as the curing catalyst (specified release agent) is used as the above-mentioned release agent. When the above-mentioned specified release agent is selected as the release agent and the surface to be treated with the release agent (surface layer) does not contain a phosphorus antioxidant (curing inhibition substance) or its containing ratio is controlled at a low level, the release agent can be appropriately cured even under a curing condition of further less thermal load (low temperature and/or short period of time). By this, a release liner having highly accurate surface shape can be obtained by inhibiting distortion of the surface shape caused by heating at the time of the release treatment. Also, by the prevention of curing inhibition of the release agent, capacity of the pressure-sensitive adhesive sheet can be exerted further excellently, by controlling remaining amount of the uncured release agent. In addition, desired liner release strength can be realized by preventing poor curing of the release agent, and for example, a phenomenon in which release strength of the release agent becomes excessively high due to poor curing of the release agent can be prevented.
As a curing condition of the above-mentioned specified release agent, a temperature of from about 100°C to about 170°C (more preferably from about 120°C to about 160°C, particularly preferably from about 130°C to about 150°C) can be employed. In addition, the period of time for heating at the temperature can be set for example to about 10 minutes or less (typically from about 10 seconds to about 10 minutes), and it is preferable to set it to a period of from about 15 seconds to about 5 minutes (particularly preferably from about 30 seconds to about 2 minutes).

Using amount of the release agent (preferably the specified release agent) is not particularly limited, and for example, it can be set to a using amount similar to the using amount of the release agent in the conventional general release liner. In a preferred embodiment, from about 0.05 g/m² to about 5 g/m² (preferably from about 0.1 g/m² to about 1 g/m²) as solid content per 1 m² release liner (projected area of the liner is used as the standard, that is, increased portion of area due to irregularity of the surface is not included) of the release agent is used. When the using amount of the release agent is too small, there may be a case in which the effect of providing release property becomes a little insufficient. When the using amount of the release agent is too large, remaining amount of uncured release agent after release treatment is apt to become large. In a preferred embodiment, kind, using amount and curing condition of the release agent are set such that the silicone migration ratio which is described later becomes less than 0.2% by mass. According to a release liner-attached pressure-sensitive adhesive sheet constructed using a release liner having a low silicone migration ratio (less uncured matter of release agent), performance of the pressure-sensitive adhesive sheet (e.g., at least one of adhesive property, aggregation property, curved surface adhesive property and the like) is further excellently exerted.

The release liner in the techniques disclosed herein has a layer B (support layer) which supports the above-mentioned layer A (surface layer). Possession of a laminated structure in which the layer A is supported by the layer B in this manner is advantageous in realizing well-balanced two or more properties (e.g., average linear expansion coefficient the release liner and formability of the surface). As the layer B (support layer), those in which the average linear expansion coefficient between 25°C and 40°C is smaller than that of the layer A (surface layer) are preferable. Since the average linear expansion coefficient of the polyolefin resin composition constituting the layer A (surface layer) is generally larger than 7 x 10⁻⁵/°C, it is preferable to construct such that the average linear expansion coefficient as the whole release liner in which the layer A (surface layer) and layer B (support layer) are laminated becomes about 7 x 10⁻ 5/°C or less (preferably about 5 x 10⁻⁵/°C, more preferably from about 1 x 10⁻⁵/°C to about 5 x 10⁻⁵/°C), by selecting a layer B (support layer) in which the above-mentioned factor is smaller than 7 x 10⁻⁵/°C (typically from about 1 x 10⁻⁵/°C to about 6 x 10⁻⁵/°C, preferably from abut 1 x 10⁻⁵/°C to about 3.5 x 10⁻⁵/°C).

As the constituting material of the layer B (support layer), for example, paper such as wood free paper, glassine paper, Japanese paper, kraft paper and the like can be suitably employed. As particularly preferred ones, wood free paper and glassine paper can be mentioned. As other suitable examples, a polyester resin (a resin which uses a polyester as the base polymer) such as polyethylene terephthalate, polyethylene naphthalate and the like can be mentioned. Particularly, a support layer made of a polyethylene naphthalate resin (PET) is preferable.

When the release liner has a two layer structure having the layer A (surface layer) and layer B (support layer), its production is easy because the structure is simple and it is also advantageous from the viewpoint of material cost. The release liner may further contain one or two or more of other layers, and for example, it may be a three layer structure in which a rear side layer is laminated on the backside of the layer B (support layer). A release liner of such a construction is preferable because a curve (curl) caused by a change in moisture and the like hardly occurs. When the layer B (support layer) is made of paper, it is particularly effective to make a construction having a rear side layer.

Construction material of the rear side layer may be a thermoplastic resin material such as a polyolefin resin, a polyester resin and the like. For example, a rear side layer having an average linear expansion coefficient almost equivalent to that of the layer A (surface layer) can be employed. By this, an effect to inhibit a curve of the release liner caused by a change in temperature and the like can be obtained. Such an effect may be exerted in both cases when the layer B (support layer) is made of paper and when it is made of a resin such as PET and the like. As the polyolefin resin composition which constitutes the rear side layer, any one of those which do not substantially contain a phosphorus antioxidant, those which contain the antioxidant at a ratio of 0.01% by mass or less and those which contain the antioxidant exceeding 0.01% can be used preferably. In addition, any one of those which contain or not contain a nucleant agent can be preferably used in the polyolefin resin composition that constitutes the rear side layer. From the viewpoint of productivity and the like, a release liner having a layer A (surface layer) and a rear side layer both formed from the same polyolefin resin composition is preferable.
In this connection, thickness of the layer B (support layer) and the rear side layer which is arranged in response to the necessity is not particularly limited and can be optionally set in response to the total thickness of the release layer and constitution (thickness, material and the like) of the layer A (surface layer), in such a manner that average linear expansion coefficient as the whole of the release liner becomes within the above-mentioned range.

The release liner-attached pressure-sensitive adhesive sheet having a construction shown in Fig. 1 can be produced by various methods. These are shown in the following.
Firstly, as an example of the method for producing a release liner, a polyolefin (PE, PP and the like) resin composition is prepared for forming a surface layer (layer A) and the composition for surface layer formation is, under a heat melted state, applied as a layer to the surface of a sheet material (paper, PET film and the like) for support layer (layer B) (ex. by extrusion lamination). Thereafter, there may be mentioned a method in which the composition for surface layer formation (extrusion product) is compressed (pressed) while solidifying with cooling to form ridges on the surface thereof (in line embossing), and the surface is treated with a release agent (preferably the specified release agent).

Also, a laminated sheet having flat surfaces (having a sheet material for support layer and a polyolefin resin layer) may be formed by applying, in a layer form, the above-mentioned composition for surface layer formation under a melted state to the surface of the sheet material for support layer and once cooling, and then subjecting the polyolefin resin layer constituting the laminated sheet to embossing by heat press and the like to form ridges on the surface (offline embossing), subsequently treating the surface with a release agent. Alternatively, after treating surface of the above-mentioned laminated sheet-constituting polyolefin resin layer with a release agent, ridges may be formed by embossing the surface (hobbing). When such an embodiment of applying embossing to the release treated surface is employed, a phenomenon of causing distortion of the surface shape due to heating at the time of release treatment can be avoided (thermal load after formation of ridges can be alleviated). In addition, there is an advantage in that releasing property of the polyolefin, resin layer from the emboss die is good.

As another production method, there may be mentioned a method in which a laminated sheet having flat surfaces is formed by applying a liquid matter prepared by dissolving or dispersing the polyolefin resin composition for surface layer formation, in a layer to the surface of a sheet material for support layer and drying it, the laminated sheet-constituting polyolefin resin layer is subjected to embossing to form ridges on the surface, and then the surface is treated with a release agent, or the surface of the polyolefin resin layer is treated with a release agent and then embossing is applied to the surface.
As still another production method, there may be mentioned a method in which a resin composition for support layer formation (e.g., PET) and a composition for surface layer formation are subjected to co-extrusion molding, ridges are formed on the surface of a layer formed from the above-mentioned composition for surface layer formation, by pressing the extruded product while cooling, and then the surface is treated with a release agent. In addition, a laminated sheet having flat surfaces (possessed of a support layer and a polyolefin resin layer) may be formed by subjecting a resin composition for support layer formation and a composition for surface layer formation to co-extrusion molding and once cooling, and the laminated sheet-constituting polyolefin resin layer is subjected to embossing and then the surface is treated with a release agent, or the surface of the polyolefin resin layer is treated with a release agent and then embossing is applied to the surface.

In addition, by preparing a polyolefin resin film formed from a polyolefin resin composition for surface layer formation alone, the resin film may be put together with a sheet material for support layer (paper, PET film and the like) and compressed, thereby laminating both of them into one body while applying embossing to the surface of the above-mentioned film, and then the surface may be subjected to a release treatment. Alternatively, a release treatment may be applied to the surface of the above-mentioned lamination-united resin film, subsequently applying embossing. Also, by applying a release treatment to one side of the above-mentioned polyolefin resin film in advance, embossing may be applied to the surface of the film while putting the other side of the resin film together with a sheet material for support layer and pressing them, or after the pressing.

The heating temperature in carrying out the above-mentioned embossing (provision of surface shape), when the material of surface layer is a PP resin, can be set for example to about 190°C or less (typically from about 120°C to about 190°C) and it is preferable to set it to from about 140°C to about 180°C from the viewpoint of productivity and the like. Also, when the material of surface layer is a PP resin, it is preferable to set it for example to about 150°C or less (typically from about 90°C to about 130°C, preferably from about 110°C to about 130°C).

The pressure-sensitive adhesive layer which constitutes the pressure-sensitive adhesive sheet can be formed for example by directly adding (typically applying) an appropriate pressure-sensitive adhesive composition to a substrate and drying and/or curing the composition according to the necessity (direct method). Thereafter, a release liner-attached pressure-sensitive adhesive sheet, in which the irregular shape of the liner surface is reflected to the pressure-sensitive adhesive layer, can be formed by superposing the release liner on the pressure-sensitive adhesive layer and pressing them according to the necessity.

Alternatively, a release liner-attached pressure-sensitive adhesive sheet may be formed by adding the above-mentioned pressure-sensitive adhesive composition to the release liner (surface of the layer A), forming a pressure-sensitive adhesive layer on the release liner by drying and/or curing the pressure-sensitive adhesive composition according to the necessity, and superposing a pressure-sensitive adhesive sheet substrate on the pressure-sensitive adhesive layer-attached liner, thereby transferring the pressure-sensitive adhesive layer to the substrate (transfer method). When the transfer method is employed, it is preferable that the heating temperature in drying the pressure-sensitive adhesive composition added to the release liner is set preferably to about 140°C or less, more preferably to about 130°C or less (e.g., from about 60°C to about 130°C).

### EXAMPLES

The following describes the invention in detail using examples, though the invention is not limited thereto. In this connection, in the following examples, part(s) means part(s) by mass and % means % by mass unless otherwise noted. In addition, the measuring methods and evaluation methods used in the following examples are shown below.

### (Measuring methods and evaluation methods)

### (1) Thickness and shape

1) Total thickness of the release liner [µm] was measured using a dial gage having a minimum reading value of 1/1000 mm.
2) Thickness of each layer constituting the release liner was measured by observing sections of the liner cut off in the thickness direction, using a field emission scanning electron microscope (FE-SEM mfd. by Hitachi High-Technologies Corporation, Trade name "S-4800") at a 300 x magnification.
3) Surface shape of the release liner and pressure-sensitive adhesive layer was measured by observing the surface under a laser microscope (mfd. by OLYMPUS OPTICAL CO., LTD.).

### (2) Average linear expansion coefficient

Along the longitudinal direction of the release liner, the release liner was cut into a strip specimen of about 10 mm in length and about 3 mm in width. On this test piece, average linear expansion coefficient at 25°C to 40°C [1/°C] was calculated by a thermomechanical analysis (TMA). The above-mentioned thermomechanical analysis was carried out using a heat stress distortion measuring device, type "EXSTAR 6000 TMA/SS", manufactured by SII Nano Technology Inc.
Measuring mode: stretch method
Measuring load: 19.6 mN
Temperature program: temperature rising at a rate of 5°C/minute from -20°C to 100°C
(3) A test piece was prepared by cutting off the release liner-attached pressure-sensitive adhesive sheet into a strip specimen of 70 mm in length and 25 mm in width along the longitudinal direction and kept for 1 hour under an atmosphere of 35°C. Thereafter, by exposing the pressure-sensitive adhesive layer by peeling off the release liner from the test piece under an atmosphere of 35°C and adhering it under pressure to a slide glass of 76 mm in length and 26 mm in width using a perforated roller of 2 kg (prepared by wrapping a rubber sheet having a hole of 8 mm in diameter and 3 mm in depth around the roller outer periphery), bubble pools were intentionally formed between the pressure-sensitive adhesive layer and slide glass.

Pressure-adhered parts other than the above-mentioned bubble pools were observed from the rear face of the slide glass (the face opposite to the pressure-sensitive adhesive sheet-applied face) under an optical microscope (a digital microscope, type "VHX-100F", mfd. by Keyence Corporation) to verify whether or not the grooves (air escape passages) remained between the pressure-sensitive adhesive layer and glass (groove remaining property).

Further, after one reciprocation of the 2 kg roller on the test piece in which the above-mentioned bubble pools were formed in an atmosphere of 35°C, degree of bubble discharge by this was verified from the rear face of the slide glass. When all of the bubbles were discharged (that is, the bubbles disappeared), it was judged that air escape property is "good", and it was judged "poor" when bubble pools remained.

### (4) Dimensional stability at the time of application

The release liner-attached pressure-sensitive adhesive sheet was cut into a size of 5 cm in width and 20 cm in length and kept for 1 hour under an atmosphere of 35°C and then, after removing the release liner, applied under pressure with a hand roller to a methacrylic plate (ACRYLITE, mfd. by Mitsubishi Rayon Co., Ltd.) which had been cleaned with isopropyl alcohol. When termination of the pressure-sensitive adhesive sheet was stuck by significantly exceeding the termination target point (that is, exceeding 1.0 mm or more), the dimensional stability at the time of application was expressed "poor", or it was expressed "good" when the termination position was less than 1.00 mm from the termination target point.

### (Example 1)

### [Preparation of application liquid for composite film]

A reaction container equipped with a condenser, a thermometer and a stirring device was charged with 5 parts of acrylic acid (AA), 35.5 parts of isobornyl acrylate (IBXA) and n-butyl acrylate (BA) as the acrylic monomers and 36.4 parts of polyoxy tetramethylene glycol (PTMG) (number average molecular weight 650, mfd. by Mitsubishi Chemical Corporation) as a polyol, and while stirring, 13.6 parts of hydrogenated xylylene diisocyanate (HXDI) was added dropwise thereto and allowed to undergo the reaction at 65°C for 1 hour, thereby obtaining a urethane polymer-acrylic monomer mixture.

Thereafter, a mixture of urethane polymer and acrylic monomers (application liquid for composite film) was obtained by 3 parts of trimethylolpropane triacrylate as a crosslinking agent and further adding 0.15 part of bis(2,4,d-trimethylbenzoyl)-phenylphosphine oxide ("IRGACURE 819" mfd. by Ciba Japan) as a photo-polymerization initiator, 1.25 parts of a ultraviolet ray absorbent "TINUVIN 400" mfd. by Ciba Japan) consisting of a reaction product of 2-(4,6-bis(2,4-dimethylphenyl)-1,3,5-triazin-2-yl)-5-hydroxyphenyl with an oxirane [(C10-C16, mainly C12-C13 alkyloxy)methyloxirane] and 1-methoxy-2-propanol, as an ultraviolet ray absorbent, and 1.25 parts of a reaction product of decane diacid bis(2,2,6,6-tetramethyl-1-(octyloxy)-4-piperidinyl) ester, 1,1-dimethylethyl hydroperoxide) and octane "TINUVIN 123" mfd. by Ciba Japan).

### [Preparation of application liquid for surface coat layer]

An application liquid for surface coat layer (solid content 28%) was prepared by adding 10.15 parts of an isocyanate crosslinking agent ("CORONATE HX" mfd. by NIPPON POLYURETHANE INDUSTRY CP., LTD.) as a curing agent, 3.5 parts by weight of dibutyltin laurate xylene dilution liquid (solid content concentration 0.01%) as a catalyst and 101 parts of toluene as a dilution solution to 100 parts of dissolution liquid of fluoroethylene vinyl ether by xylene and toluene ("LF 600" mfd. by Asahi Glass C., Ltd., contains 50% by weight solid content).

### [Preparation of substrate]

The thus obtained application liquid for surface coat layer was coated on a polyethylene terephthalate film (75 µm in thickness) which had been release-treated as the temporary support 1 and dried and cured at a temperature of 140°C for 3 minutes to effect formation of a fluoroethylene vinyl ether layer. In this connection, thickness of the surface coat layer after drying was 10 µm.

The prepared application liquid for composite film was coated on the thus obtained surface coat layer in such a manner that its thickness after curing became 290 µ (300 µm including the surface coat layer thickness), and a release-treated polyethylene terephthalate (PET) film was superposed on this as a separator. A composite film (having a surface coat layer) was formed on the temporary support 1 by irradiating ultraviolet ray (illumination intensity: 290 mW/cm², irradiation amount: 4,600 mJ/cm²) to this PET film face using a metal halide lamp to effect curing. Thereafter, the release treated polyethylene terephthalate film (separator) was peeled off, and then unreacted remaining acrylic monomers were dried by drying at 140°C for 3 minutes, thereby obtaining the substrate.

### [Preparation of pressure-sensitive adhesive layer composition]

A mixture prepared by mixing 90 parts of isononyl acrylate and 10 parts of acrylic acid as monomer component was blended with 0.05 part of "IRGACURE 651" (mfd. by Ciba Japan) and 0.05 part of "IRGACURE 1841" (mfd. by Ciba Japan) as photo-polymerization initiators, and then ultraviolet ray was irradiated thereto until its viscosity became about 15 Pa·s (BH viscometer No. 5 rotor, 10 rpm, measuring temperature 30°C), thereby preparing a partially polymerized acrylic composition (UV syrup).

A pressure-sensitive adhesive composition was prepared by adding 0.2 part of trimethylolpropane acrylate and 1 part of a hindered phenol antioxidant (trade name "IRGANOX 1010" mfd. by Ciba Japan) to 100 parts of the thus obtained UV syrup.

### [Preparation of release liner]

A PE layer was formed by extrusion laminating a linear low density polyethylene (LDPE) onto both surfaces of wood free paper having a basis weight of 100 g/m². As the LDPE, a product of SUMITOMO CHEMICAL CO., LTD, trade name "SUMIKATHENE CE 4009" (an LDPE which does not contain a phosphorus antioxidant, to be referred sometimes to as "PE-0" hereinafter) was used. By this, a sheet of three layer structure having PE layers on both sides of wood free paper (support layer) was prepared. Total thickness of this laminated sheet was 173 µm and among this, thickness of the support layer was 119 µm and thickness of each PE layer was 27 µm.
Next, a release treatment was applied to the surface of one PE layer (surface to be treated). Illustratively, a commercially available addition-curable silicone release agent (a platinum catalyst is used, solvent free type) was applied to the above-mentioned surface to be treated to a coating amount of about 1.0 g/m² and cured by heating at 125°C for 1 minute.

By applying a heat press processing to the above-mentioned release-treated surface, a grid-like convex part having mutually intersecting first ridge group and second ridge group was formed on the above-mentioned surface (pressure-sensitive adhesive layer side surface). All of the sectional shapes and pitches of the ridges constituting the first ridge group and second ridge group are the same (this point is also the same in the case of the following Examples 2 to 12 and Comparative Examples 1 to 3), and in Example 1, the pitch is 1270 µm, the distance LA between bases of adjoining ridges is 1209 µm, the width (corresponds to the lower side length of the trapezoid shape in the sectional shape of ridge) LB of the base of each ridge is 61 µm and the height (corresponds to the height of the above-mentioned trapezoid shape) LC of each ridge is 22 µm (cf. Fig. 2). In addition, the angle of the above-mentioned first ridge group and second ridge group to the longitudinal direction of the release liner is 45 degree. In this connection, the above-mentioned press processing was carried out under conditions of 100°C in the upper heater temperature setting, 145°C in the lower heater temperature setting, 6 MPa in press pressure and 5 minutes in pressing period of time. In this manner, the release liner of Example 1 was obtained.

### [Preparation of release liner-attached pressure-sensitive adhesive sheet]

The prepared pressure-sensitive adhesive composition was coated on the pressure-sensitive adhesive layer side surface of this release liner to a final thickness of 50 µm and then a release-treated PET film was superposed and coated on this as a separator. Next, after its curing by irradiating ultraviolet ray (illumination intensity: 290 mW/cm², irradiation amount: 4,600 mJ/cm²) to the PET film face using a metal halide lamp, unreacted remaining acrylic monomers were dried by drying at 140°C for 3 minutes to form a pressure-sensitive adhesive layer (with a separator) on the release liner.
By removing the separator, the exposed pressure-sensitive adhesive layer was superposed on and stuck to the composite film face of the obtained substrate to prepare a release liner-attached pressure-sensitive adhesive sheet (surface coat layer/composite film/pressure-sensitive adhesive layer/release liner).

### (Examples 2 to 6)

The release liners of Examples 2 to 6 were obtained in the same manner as in Example 1, except that a grid-like convex part having mutually intersecting first ridge group and second ridge group with the pitch and sectional shape shown in Table 1 was formed on the surface of respective release liners by carrying out the above-mentioned press processing using an emboss die having a shape different from Example 1. The release liner-attached pressure-sensitive adhesive sheets of Examples 2 to 6 were prepared in the same manner as in Example 1, except that said the above-mentioned release liners were used.

### (Examples 7 to 12)

### [Preparation of release liner]

A PP layer was formed by extrusion laminating a homopolypropylene (homoPP) on both sides of a PET film (mfd. by Toray Industries, Inc., trade name "Lumirror S-28"). As the homoPP, a product of Japan Polypropylene Corporation, trade name "NOVATEC FL03H" (a homoPP which does not contain a phosphorus antioxidant, to be referred sometimes to as "PP-0" hereinafter), was used. By this, a sheet of three layer structure having PP layers on both sides of the PET film (support layer) was prepared. Total thickness of this laminated sheet was 160 µm and among this, thickness of the support layer was 100 µm and thickness of each PP layer was 30 µm.

Next, a release treatment was carried out on one surface of the PP layer (surface to be treated). Illustratively, a commercially available addition-curable silicone release agent (a platinum catalyst is used, a solvent type) was applied to the above-mentioned surface to be treated in such a manner that the applying amount based on the solid content became from about 0.3 g/m² to about 0.5 g/m² and dried and cured by heating at 145°C for 1 minute.

A grid-like convex part having mutually intersecting first ridge group and second ridge group with the pitch and sectional shape shown in Table 1 was formed by applying a heat press processing to the above-mentioned release treated surface. The above-mentioned press processing was carried out under conditions of 160°C in the upper heater temperature setting, 165°C in the lower heater temperature setting, 6 MPa in press pressure and 5 minutes in pressing period of time. In this manner, the release liners of Examples 7 to 12 were obtained.

### [Preparation of release liner-attached pressure-sensitive adhesive sheet]

The release liner-attached pressure-sensitive adhesive sheets of Examples 7 to 12 were prepared in the same manner as in Example 1, except that said the above-mentioned release liners were used.

### (Comparative Examples 1 to 3)

A random polypropylene containing 0.04% of a phosphorus antioxidant (mfd. by Japan Polypropylene Corporation, trade name "NOVATEC FY 4", to be referred sometimes to as "PP-2" hereinafter) was charged into an extruder and extruded from a T die of the extruder at a die temperature of 240°C. The extrusion product was held between a pair of rollers and, while cooling, formed into a sheet shape of about 170 µm in thickness. Next, a release treatment was carried out on one surface of the PP sheet (surface to be treated). That is, the same silicone release agent used in Example 7 was applied to the above-mentioned surface to be treated in a solid content based amount of from about 0.3 g/m² to about 0.5 g/m² and dried and cured by heating at 145°C for 1 minute.

A grid-like convex part having mutually intersecting first ridge group and second ridge group with the pitch and sectional shape shown in Table 1 was formed by applying a heat press processing to the above-mentioned release treated surface. The above-mentioned press processing was carried out under conditions of 160°C in the upper heater temperature setting, 175°C in the lower heater temperature setting, 6 MPa in press pressure and 10 minutes in pressing period of time. In this manner, the release liners of Comparative Examples 1 to 3 were obtained.
The release liner-attached pressure-sensitive adhesive sheets of Comparative Examples 1 to 3 were prepared in the same manner as in Example 1, except that the above-mentioned release liners were used.

### [Measurement and evaluation]

Measurement of the thickness and shape of release liners, measurement of the shape of pressure-sensitive adhesive sheets and the thickness of pressure-sensitive adhesive layers, measurement of the average linear expansion coefficient of release liners, evaluation of the air escape property and evaluation of the sticking dimensional stability were carried out on the release liner-attached pressure-sensitive adhesive sheets obtained in Examples 1 to 12 and Comparative Examples 1 to 3, in accordance with the measuring methods and evaluation methods described in the above. The measured values, evaluation results and the like thereof are shown in Table 1 and Table 2.

**Table 1**

| | Release liner structure | Material of surface to be treated | Pitch (µm) | LA (µm) | LB (µm) | LC (µm) |
|---|---|---|---|---|---|---|
| Ex. 1 | PE/paper/PE | PE-0 | 1270 | 1209 | 61 | 22 |
| Ex. 2 | PE/paper/PE | PE-0 | 770 | 627 | 143 | 20 |
| Ex. 3 | PE/paper/PE | PE-0 | 620 | 550 | 70 | 25 |
| Ex. 4 | PE/paper/PE | PE-0 | 670 | 600 | 70 | 25 |
| Ex. 5 | PE/paper/PE | PET-0 | 870 | 800 | 70 | 25 |
| Ex. 6 | PE/paper/PE | PE-0 | 580 | 550 | 30 | 15 |
| Ex. 7 | PE/PETIPE | PP-0 | 1270 | 1209 | 61 | 22 |
| Ex. 8 | PE/PET/PE | PP-0 | 770 | 627 | 143 | 20 |
| Ex. 9 | PE/PET/PE | PP-0 | 620 | 550 | 70 | 25 |
| Ex. 10 | PE/PET/PE | PP-0 | 670 | 600 | 70 | 25 |
| Ex. 11 | PE/PET/PE | PP-0 | 870 | 800 | 70 | 25 |
| Ex. 12 | PE/PET/PE | PP-0 | 580 | 550 | 30 | 15 |
| Comp. Ex. 1 | PP monolayer | PP-2 | 500 | 430 | 70 | 25 |
| Comp. Ex. 2 | PP monolayer | PP-2 | 620 | 550 | 70 | 25 |
| Comp. Ex. 3 | PP monolayer | PP-2 | 580 | 550 | 30 | 15 |

| | | | | | | |
|---|---|---|---|---|---|---|
| LA: distance between bases of adjoining ridges LB: width of base of ridge LC: height of ridge | | | | | | |

**Table 2**

| | Surface shape of pressure-sensitive adhesive layer | | | Release liner | Dimensional stability | Air escape property |
|---|---|---|---|---|---|---|
| | La (µm) | Lb (µm) | Lc (µm) | α(/°C) | | |
| Ex. 1 | 1211.0 | 65.0 | 24.8 | 3.4 x 10⁻⁵ | good | good |
| Ex. 2 | 630.7 | 142.7 | 24.3 | 3.4 x 10⁻⁵ | good | good |
| Ex. 3 | 555.4 | 73.6 | 33.7 | 3.4 x 10⁻⁵ | good | good |
| Ex. 4 | 599.9 | 71.0 | 27.0 | 3.4 x 10⁻⁵ | good | good |
| Ex. 5 | 801.1 | 73.4 | 27.9 | 3.4 x 10⁻⁵ | good | good |
| Ex. 6 | 554.1 | 34.5 | 21.3 | 3.4 x 10⁻⁵ | good | good |
| Ex. 7 | 1211.0 | 65.0 | 21.3 | 3.3 x 10⁻⁵ | good | good |
| Ex. 8 | 630.7 | 142.7 | 24.8 | 3.3 x 10⁻⁵ | good | good |
| Ex. 9 | 555.4 | 73.6 | 24.3 | 3.3 x 10⁻⁵ | good | good |
| Ex. 10 | 599.9 | 71.0 | 33.7 | 3.3 x 10⁻⁵ | good | good |
| Ex. 11 | 801.1 | 73.4 | 27.0 | 3.3 x 10⁻⁵ | good | good |
| Ex. 12 | 554.1 | 34.5 | 27.9 | 3.3 x 10⁻⁵ | good | good |
| Comp. Ex.1 | 430.0 | 70.0 | 25.0 | 17.0 x 10⁻⁵ | poor | good |
| Comp. Ex. 2 | 555.4 | 73.6 | 33.7 | 17.0 x 10⁻⁵ | poor | good |
| Comp. Ex. 3 | 554.1 | 34.5 | 21.3 | 17.0 x 10⁻⁶ | poor | good |

| | | | | | | |
|---|---|---|---|---|---|---|
| La: distance between openings of adjoining grooves Lb: opening width of ridge Lc: depth of ridge α : average linear expansion coefficient between 25°C and 40°C | | | | | | |

As is clear from Table 2, each of the release liner-attached pressure-sensitive adhesive sheets of Examples 1 to 12 showed good air escape property even at a relatively high atmospheric temperature (35°C in this case), despite that each partial region (reference number 124 of Fig. 1) of the release liner and each of the corresponding adhesion faces of the pressure-sensitive adhesive sheet have an extent of exceeding a circle of 500 µm in diameter (in other wards, continuity of the adhesion face is high). This result supports that a release liner having high shape accuracy of the pressure-sensitive adhesive layer side surface was realized due to the small quantity of thermal load after formation of ridges on the surface, and that high accuracy grooves (air escape passages) were formed on the pressure-sensitive adhesive layer by reflecting the shape accuracy of the release liner surface. In addition, each of the release liner-attached pressure-sensitive adhesive sheets of Examples 1 to 12 has small influence of the atmospheric temperature upon application dimension (that is, dimensional stability is high) so that good workability can be maintained within a broad temperature range.

Contrary to this, Comparative Examples 1 to 3 which have large average linear expansion coefficient of the release liner were low in dimensional stability of the pressure-sensitive adhesive sheet and showed a tendency of easily protruding from the defined dimension as the applying atmospheric temperature becomes high. Thus, they are lack in workability under high temperature.

In this connection, the pressure-sensitive adhesive sheet of Examples 1 to 12 has a flexibility as a film and has an excellent flexibility for the irregular surface and curved surface of adherend (ex. vinyl chloride sol coating part). In addition, the pressure-sensitive adhesive sheets of Examples 1 to 12, in which each adhesion surface has an extent of exceeding a circle of 500 µm in diameter, has a high curved surface adhesive property, and it was able to realize further high pressure-sensitive adhesive performance by the pressure-sensitive adhesive sheet having high continuity of adhesion surface, in comparison with a pressure-sensitive adhesive sheet in which the adhesion surface was fractionalized.

While the invention has been described in detail with reference to specific embodiments thereof, it will be apparent to one skilled in the art that various changes and modifications can be made therein without departing from the spirit and scope thereof..
Incidentally, the present application is based on Japanese Patent Application No. 2009-250438 filed on October 30,2009, and the contents are incorporated herein by reference.
All references cited herein are incorporated by reference herein in their entirety.
Also, all the references cited herein are incorporated as a whole.

As has been described in the foregoing, according to the release liner-attached pressure-sensitive adhesive sheet according to the invention, proper air escape property at the time of applying the pressure-sensitive adhesive sheet can be ensured without carrying out excessive fragmentation of the surface of the pressure-sensitive adhesive layer. Accordingly, proper pressure-sensitive adhesive performance (curved surface adhesive property and the like) can be exerted by the pressure-sensitive adhesive sheet. In addition, since average linear expansion coefficient of the release liner is small, the above-mentioned proper air escape property can be stably maintained at a broad range of temperature, and the influence of using temperature of the release liner-attached pressure-sensitive adhesive sheet upon the applying dimension of the pressure-sensitive adhesive sheet is small. Thus, the pressure-sensitive adhesive sheet can be properly applied at a broad range of working environmental temperature, by easily keeping it within the defined dimension. The above-mentioned release liner-attached pressure-sensitive adhesive sheet is useful as a pressure-sensitive adhesive sheet and the like for various kinds of decoration or surface protection, and for example, is ideal as a decoration sheet (typically a coating substitution sheet) which is applied to car facings, house construction materials and the like. This is because a high level decorative designing is required for such a decoration sheet, and what is more, since the working environment could become a relatively high temperature (e.g., from 30°C to 35°C) inside of a factory and the like in the summer season, good air escape property and dimensional stability are required even under a high temperature environment. The release liner-attached pressure-sensitive adhesive sheet as disclosed herein is suited for applying it by manual labor and can also be suitably employed for example in an application which uses a sticking device that applies the pressure-sensitive adhesive sheet continuously to an adherend while peeling off the release liner from the pressure-sensitive adhesive sheet.

### Description of Reference Numerals

- 1 :: release liner-attached pressure-sensitive adhesive sheet
- 2A and 2B:: ridges
- 3A and 3B:: grooves
- 10:: release liner
- 10A:: pressure-sensitive adhesive layer side surface
- 12:: surface layer (layer A)
- 120:: grid-like convex part
- 121:: first ridge group
- 122:: second ridge group
- 124:: partial region
- 14:: support layer (layer B)
- 20:: pressure-sensitive adhesive sheet
- 22:: substrate
- 24:: pressure-sensitive adhesive layer
- 240:: grid-like concave part
- 241:: first groove group
- 242:: second groove group
- 244:: initial adhesion region (adhesion surface)

## Claims

1. A release liner-attached pressure-sensitive adhesive sheet comprising a pressure-sensitive adhesive sheet having a substrate and a pressure-sensitive adhesive layer and a release liner arranged on the pressure-sensitive adhesive layer,
wherein the substrate comprises a composite film containing a urethane polymer,
the release liner is a layered product comprising a layer A which constitutes a surface of a pressure-sensitive adhesive layer side and a layer B that supports the layer A, and the release liner has an average linear expansion coefficient between 25°C and 40°C of 7 x 10⁻⁵/°C or less, and
the pressure-sensitive adhesive sheet has a total light transmittance of 80% or more.

2. The release liner-attached pressure-sensitive adhesive sheet according to claim 1,
wherein the layer A constituting the release liner is formed from a polyolefin resin composition which does not contain a phosphorus antioxidant or contains 0.01% by mass or less of the phosphorus antioxidant,
the surface of the pressure-sensitive adhesive layer side of the release liner is divided into a plurality of partial regions by a plurality of ridges extending across said surface and having a height of from 5 to 50 µm, and
at least a part of said partial regions has a size where an inscribed circle of said region exceeds 500 µm in diameter.

3. The release liner-attached pressure-sensitive adhesive sheet according to claim 1 or 2, wherein the surface of the pressure-sensitive adhesive layer side of the release liner is release-treated with an addition-curable silicone release agent containing a platinum catalyst.

4. The release liner-attached pressure-sensitive adhesive sheet according to claim 2 or 3, wherein the plurality of ridges include a first ridge group mutually extending in parallel and a second ridge group mutually extending in parallel across with said first ridge group, and
each of the first ridge group and the second ridge group is formed with such a pitch that a distance between bases of adjoining ridges exceeds 500 µm.

5. The release liner-attached pressure-sensitive adhesive sheet according to any of claims 2 to 4, wherein a base of the ridge has a width of 15 µm or more and 200 µm or less.

6. The release liner-attached pressure-sensitive adhesive sheet according to any of claims 1 to 5, wherein the layer B is made of paper.

7. The release liner-attached pressure-sensitive adhesive sheet according to any of claims 1 to 5, wherein the layer B is made of a polyethylene terephthalate resin.

8. The release liner-attached pressure-sensitive adhesive sheet according to any of claims 2 to 7, wherein the layer A is prepared by laminating a layer comprising said polyolefin resin composition on at least one surface of the layer B.

## Patentansprüche

1. Auf einer Abziehschicht befestigte druckempfindliche Klebfolie umfassend eine druckempfindliche Klebefolie mit einem Substrat und einer druckempfindlichen Klebeschicht und einer Abziehschicht, welche auf der druckempfindlichen Klebeschicht angeordnet ist,
wobei das Substrat einen Verbundfilm enthaltend ein Urethanpolymer umfasst,
die Abziehschicht ein Schichtprodukt ist, umfassend eine Schicht A, welche eine Oberfläche einer druckempfindlichen Klebeschichtseite bildet, und eine Schicht B, welche die Schicht A trägt, und wobei die Abziehschicht einen mittleren linearen Ausdehnungskoeffizienten zwischen 25 °C und 40 °C von 7 x 10⁻⁵/°C oder weniger aufweist, und
wobei die druckempfindliche Klebefolie eine insgesamte Lichtdurchlässigkeit von 80% oder mehr aufweist.

2. Auf einer Abziehschicht befestigte druckempfindliche Klebefolie nach Anspruch 1, wobei die Schicht A, welche die Abziehschicht bildet, aus einer Polyolefinharz-Zusammensetzung gebildet ist, welche kein phosphorhaltiges Antioxidationsmittel enthält oder 0,01 Masseprozent oder weniger des phosphorhaltigen Antioxidationsmittels enthält,
die Oberfläche der druckempfindliche Klebstoffschichtseite der Abziehschicht durch eine Vielzahl von Rippen, die sich quer über die Oberfläche erstrecken und eine Höhe von 5 bis 50 µm aufweisen, in eine Vielzahl von Teilbereichen unterteilt ist, und
wobei wenigstens ein Teil der Teilbereiche eine Größe aufweist, dass ein Inkreis des Bereichs 500 µm im Durchmesser überschreitet.

3. Auf einer Abziehschicht befestigte druckempfindliche Klebefolie nach Anspruch 1 oder 2, wobei die Oberfläche der druckempfindlichen Klebeschichtseite der Abziehschicht mit einem zusätzlichen härtbaren Silikonabziehmittel, welches einen Platinkatalysator enthält, zum Abziehen behandelt ist.

4. Auf einer Abziehschicht befestigte druckempfindliche Klebefolie nach Anspruch 2 oder 3, wobei die Vielzahl von Rippen eine erste Rippengruppe umfasst, welche sich gemeinsam parallel erstrecken, und eine zweite Rippengruppe, welche sich gemeinsam parallel quer zur ersten Rippengruppe erstrecken, und
wobei jede der ersten Rippengruppe und der zweiten Rippengruppe mit solch einem Abstand ausgebildet ist, dass ein Abstand zwischen der Basis der benachbarten Rippen 500 µm überschreitet.

5. Auf einer Abziehschicht befestigte druckempfindliche Klebefolie nach einem der Ansprüche 2 bis 4, wobei eine Basis Rippe eine Breite von 15 µm oder mehr und von 200 µm oder weniger aufweist.

6. Auf einer Abziehschicht befestigte druckempfindliche Klebefolie nach einem der Ansprüche 1 bis 5, wobei die Schicht B aus Papier hergestellt ist.

7. Auf einer Abziehschicht befestigte druckempfindliche Klebefolie nach einem der Ansprüche 1 bis 5, wobei die Schicht B aus einem Polyethylenterephthalatharz hergestellt ist.

8. Auf einer Abziehschicht befestigte druckempfindliche Klebefolie nach einem der Ansprüche 2 bis 7, wobei die Schicht A durch Laminieren einer Schicht, welche die Polyolefinharz-Zusammensetzung umfasst, auf wenigstens eine Oberfläche der Schicht B hergestellt ist.

## Revendications

1. Feuille adhésive sensible à la pression fixée à une doublure de séparation comprenant une feuille adhésive sensible à la pression présentant un substrat et une couche adhésive sensible à la pression et une doublure de séparation disposée sur la couche adhésive sensible à la pression, dans laquelle le substrat comprend un film composite contenant un polymère d'uréthane,
la doublure de séparation est un produit en couches comprenant une couche A qui constitue une surface d'un côté de couche adhésive sensible à la pression et une couche B qui supporte la couche A, et la doublure de séparation présente un coefficient de dilatation linéaire moyen entre 25°C et 40°C de 7 x 10⁻⁵/°C ou inférieur, et
la feuille adhésive sensible à la pression présente un coefficient de transmission de lumière totale de 80 % ou supérieur.

2. Feuille adhésive sensible à la pression fixée à une doublure de séparation selon la revendication 1,
dans laquelle la couche A constituant la doublure de séparation est constituée d'une composition de résine de polyoléfine qui ne contient pas un antioxydant de phosphore ou qui contient 0,01 % en masse ou moins de l'antioxydant de phosphore,
la surface du côté de la couche adhésive sensible à la pression de la doublure de séparation est divisée en plusieurs régions partielles par plusieurs crêtes s'étendant à travers ladite surface et présentant une hauteur de 5 à 50 µm, et
au moins une partie desdites régions partielles présente une dimension dans laquelle un cercle inscrit de ladite région excède 500 µm de diamètre.

3. Feuille adhésive sensible à la pression fixée à une doublure de séparation selon la revendication 1 ou 2, dans laquelle la surface du côté de la couche adhésive sensible à la pression de la doublure de séparation est traitée pour séparation avec un agent de séparation de silicone durcissable par addition contenant un catalyseur de platine.

4. Feuille adhésive sensible à la pression fixée à une doublure de séparation selon la revendication 2 ou 3, dans laquelle les nombreuses crêtes comprennent un premier groupe de crêtes s'étendant mutuellement parallèlement et un second groupe de crêtes s'étendant mutuellement parallèlement à travers ledit premier groupe de crêtes, et
chacun dudit premier groupe de crêtes et dudit second groupe de crêtes est formé de telle sorte qu'un pas qui est une distance entre les bases des crêtes adjacentes excède 500 µm.

5. Feuille adhésive sensible à la pression fixée à une doublure de séparation selon l'une quelconque des revendications 2 à 4, dans laquelle une base de la crête présente une largeur de 15 µm ou supérieure et de 200 µm ou inférieure.

6. Feuille adhésive sensible à la pression fixée à une doublure de séparation selon l'une quelconque des revendications 1 à 5, dans laquelle la couche B est constituée de papier.

7. Feuille adhésive sensible à la pression fixée à une doublure de séparation selon l'une quelconque des revendications 1 à 5, dans laquelle la couche B est constituée d'une résine de poly(éthylène téréphtalate).

8. Feuille adhésive sensible à la pression fixée à une doublure de séparation selon l'une quelconque des revendications 2 à 7, dans laquelle la couche A est préparée par stratification d'une couche comprenant ladite composition de résine de polyoléfine sur au moins une surface de la couche B.
